# EUROPEAN PATENT APPLICATION

(11) **EP 1 653 235 A1**
(43) Date of publication of application: **03.05.2006**
(21) Application number: 04256637.2
(22) Date of filing: 27.10.2004
(51) Int. Cl.: G01N 35/10

(54) **Method and unit for controlling reservoirs containing reagents**

(71) Applicant: The Automation Partnership (Cambridge) Limited, Royston, Hertfordshire SG8 5WY (GB)
(72) Inventor: Oakeshott, Robert Bernard Simon, Cambridge CB2 2HU (GB); Grant, Paul Simon, Cambridge CB1 2DY (GB)
(74) Representative: Brunner, Michael John

(57) **Abstract**

There is provided a method and system for controlling cleaning of reservoirs in an automated liquid handling system, in which the reservoirs are capable of containing multiple reagents. In particular, the invention relates to a method for facilitating reservoir reuse in a liquid handling module of an automated cell culturing system.

## Description

### Introduction

The invention relates to a method and system for controlling cleaning of reservoirs in an automated liquid handling system, where the reservoirs are capable of containing multiple reagents. In particular, the invention facilitates reservoir reuse in a liquid handling module of an automated cell culturing system.

### Background

In prior art cell culturing systems, reservoirs are provided for each reagent needed in the cell culture being performed. The reagent is then supplied to cell culture vessels as and when it is deemed to be required. This arrangement is straightforward since it ensures that there is no cross-contamination of reagent before application to the vessel.

Cell culture techniques have diversified rapidly in recent years and the variety of different reagents required has increased many times over. In consequence, the segregation of reagents in separate reservoirs has become impractical.

Cells and cell-derived products, such as proteins, are vital tools in many areas of drug discovery and development in the genomics, biotechnology and pharmaceutical industries. Genetically modified cell lines and proteins are used to help elucidate the process of disease, to discover appropriate targets for drug therapy, to study protein structures and as reagents in assays for screening libraries of chemical compounds to identify lead compounds suitable for further development. The pharmacokinetic, metabolic and toxicological properties of chemical compounds are also studied by means of cell based assays. In addition, cells and proteins derived from cells form the basis of many modern therapies, including therapeutic antibodies.

These different activities require the efficient culture of cells of many types and morphologies. The types of cells that are used to support these activities range include mammalian cells, insect cells, yeasts and bacteria. Each type has particular characteristics and the researcher selects the appropriate cell type accordingly. For example, bacteria grow rapidly and are easy to culture, mammalian cells grow more slowly but are able to perform post-translational modification of proteins and have complex signalling pathways that can be interrogated in functional assays.

Each cell type and cell line (specific type or strain of cell) will have specific requirements if they are to grow and express protein, or other characteristic of interest, efficiently. These requirements include provision of the right environment e.g. temperature, oxygen, pH, and nutrient mix "media" (salts, glucose, lipids, amino acids, vitamins, hormones, growth factors etc.). They may also include selective agents (to suppress unmodified cells and ensure that only modified cell lines grow and divide) and inducer (as a signal for protein expression). Some cells such as mammalian cells are far more stringent in their requirements, others such as bacteria can thrive under a wide range of environmental conditions on simple defined media.

In order that the researcher has cells or protein of the right quality for their research, they must provide the appropriate growth conditions for the cells. Often significant amounts of routine manual work are necessary to maintain the correct nutrient and gas mix, remove waste products and provide the right temperature for incubation, in order to sustain a constant supply of cells.

Conventional cell culture techniques require manual performance of a series of steps (tasks). The steps may include seeding, re-feeding, harvesting, expansion, checking cell growth, liquid disposal, and limiting dilution.

Whether the techniques used are manual or automated, a variety of types of vessels, lids, pipettes, and tubes are used in the culture of cells: the term "labware" is the generic term. Examples of particular types of vessels include reservoirs, flasks, bottles, plates (comprising fixed arrays of fluidly separated dishes - i.e. multiwell dishes) and culture vessel blocks (CVBs). Lids may be provided for each vessel. They may alternatively cover more than one vessel, exposing the contents of more than one vessel when the lid is removed.

While providing reservoirs for each reagent ensures that there is no cross-contamination of reagent before application to the vessel, it is impractical for systems where many experiments are being performed in parallel and/or series with one another. Due to the range of reagents now required, especially for systems performing many experiments, many reservoirs are needed.

Workspace is inevitably limited in automated liquid handling systems. The more reservoirs there are, the larger any liquid handling area must be. Liquid handling robotics must be provided to service that increased area.

Reagents often have different storage, supply, and safe disposal requirements. Furthermore, the material in the reservoirs may be labile and deteriorate over time, leading to a complex set of constraints for any system user. For these reasons, conventional systems generally can not cope with the large numbers of reservoirs that might be needed. Those that could are likely to be large as a result.

There is a pressing need for improved logistics in the supply of reagents in cell culture systems.

### Statement of the Invention

In accordance with an aspect of the invention, there is provided a method for controlling usage of reservoirs in a liquid handling area of an automated liquid handling system, the liquid handling area comprising at least one reservoir, which, in use, contains a reagent, the method comprising:
determining whether the reagent contained in the reservoir is expected to be used within a predetermined time interval or has not been used for a given period; and
where the reagent is not expected to be used within the predetermined time interval or is no longer suitable for use, removing the contents of the reservoir.

By using this method, the usage of reservoirs can be made more efficient. Furthermore, more different reagents can be used than there are reservoirs for holding them. One reservoir can contain multiple reagents at different times with the risk of cross-contamination kept to an acceptably low level.

By governing the logistics of filling, emptying and washing reservoirs at appropriate times, the method also improves the handling of labile reagents, reagents that are expected to attract contamination, as well as reagents for which an operator is concerned about the possibility of a reagent attracting contamination.

The predetermined time interval may be different from the given period.

The step of removing the contents of the reservoir preferably comprises aspirating the contents and dispensing the aspirated contents to waste. Alternatively, the reservoir may include a drain, and this step may further comprise opening the drain to facilitate the escape of the contents from the reservoir. In yet another alternative, removing the contents of the reservoir may comprise tipping the reservoir, thereby pouring the contents away to waste.

It is preferred that the method further comprises cleansing the reservoir in accordance with a cleansing procedure.

The method may further comprise the step of removing cleansing liquids from a further reservoir.

Alternatively or additionally, the method may further comprise dispensing liquids to the reservoir.

Dispensed wash fluid may include water and/or alcohol. Indeed, there may be a plurality of wash stages in any reservoir cleansing procedure, depending upon the required level of cleansing.

One factor affecting the level of cleansing required, is the degree to which washing, emptying and filling the reservoirs distracts the automated liquid handling system from performing its primary functions. Each time the liquid handling system washes or empties the reservoirs, reagent is discarded to waste and the liquid handling system is occupied with the reservoir and not with cell culture functions. As a result, there is a tendency to keep the number of washes to a minimum.

For convenience, pipette tips may be used to transfer wash fluid to and from the reservoir. The pipette tips being used may themselves be washed. Suitable fluids for washing pipette tips include alcohol and water. By using alcohol and/or water to sterilise tips in a controlled fashion, the invention allows the use of reusable tips. Even though the tips are reusable, it is often convenient that they are of a disposable type.

The method may also include determining when to fill the reservoir. This may be achieved by providing the reservoir with a level sensor, so that the method further comprises sensing the level of reagent in the reservoir and ensuring that, when the current reagent is expected to be used, the level of reagent in the reservoir is maintained constant.

Additionally or alternatively, the reservoir may be provided with a level sensor that senses whether a threshold value has been crossed. The method may further comprise checking whether the level of reagent has dropped below a first minimum threshold and ensuring that, when the current reagent is expected to be used, reagent is dispensed into the reservoir in order to increase the volume of reagent in the reservoir above the first threshold. The method may also further comprise checking whether the level of reagent exceeds a second maximum threshold and ensuring that, when the current reagent is expected to be used, reagent is aspirated from the reservoir in order to reduce the volume of reagent in the reservoir below the second threshold.

In accordance with a further aspect of the invention, there is provided an automated liquid handling unit for facilitating cleansing of reagent reservoirs, the unit comprising: at least one reagent reservoir, which, in use, contains a reagent; and a liquid handling robot for effecting a reservoir management procedure; wherein the reservoir management procedure includes a procedure for removing the contents of the reservoir, the procedure being governed in accordance with a determination of whether the reagent contained in the reservoir is expected to be used within a predetermined time interval or has not been used for a given period.

The predetermined time interval is preferably different from the given period.

Advantageously, the liquid handling robot may be provided with pipette tips and the procedure for removing the contents of the reservoir may comprise aspirating the contents with the pipette tips and dispensing the aspirated contents to waste.

Alternatively, the reservoir may include a drain, and the procedure for removing the contents of the reservoir may comprise opening the drain to facilitate the escape of the contents from the reservoir.

Alternatively, the procedure for removing the contents of the reservoir may comprise tipping the reservoir thereby pouring the contents away to waste.

The reservoir cleansing procedure preferably also includes a procedure for cleansing the reservoir.

The reservoir preferably has a heat exchange portion for facilitating cooling or heating of the reagent within the reservoir.

The liquid handling area may include a temperature controlled water bath. Furthermore, the heat exchange portion may be arranged to conduct heat between the water bath and the reagent in the reservoir.

The reservoir may be provided with a lid to reduce evaporation. This is advantageous where the contents of the reservoir are liable to evaporate. One example would be an alcohol-based reagent.

Conveniently, the lid on the reservoir can be automatically removed by the liquid handling module.

The reagent used may include a condition indicator for indicating a condition of the reagent. To this end, the reservoir may be provided with an indicator sensor for sensing the indicated reagent condition and the method may include feeding the indicated condition back to the automated system.

Alternatively, the reservoir may be provided with a sensor for directly sensing the condition and feeding the sensed condition back to the automated system.

### Brief Description of the Drawings

For a better understanding of the invention, reference will now be made, by way of example only, to the accompanying drawings in which:-
Figure 1 shows a plan view of a preferred arrangement of modules in a cell culture system; and
Figure 2 shows a plan view of a liquid handling module of the cell culture system in Figure 1.

### Detailed Description

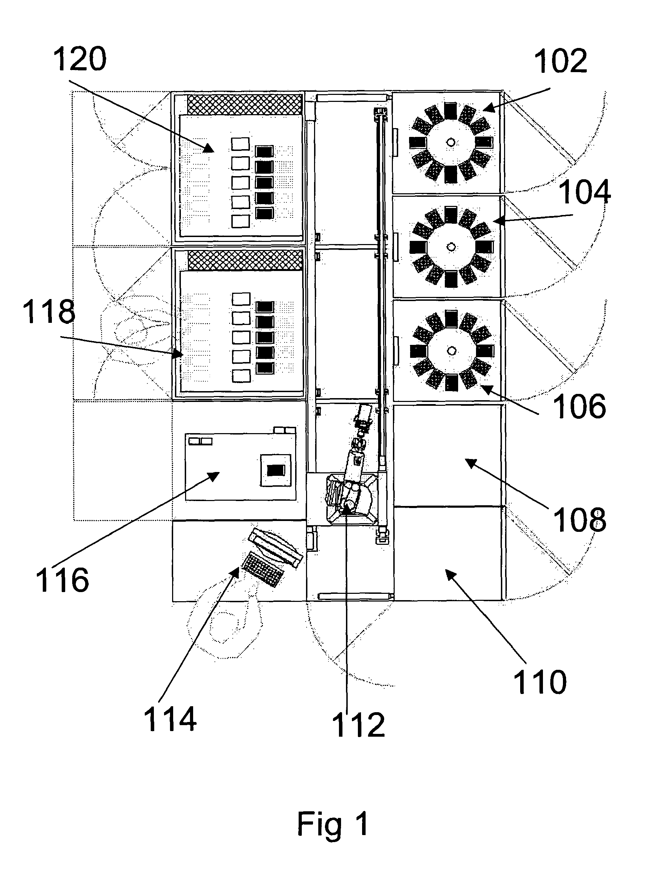

All liquid handling, including liquid disposal, is performed within a clean processing area of the system. In the system illustrated in Figure 1, the system has: two liquid handling modules 118, 120, which operate in parallel upon the contents of wells in selected plates 130; three incubators 102, 104, 106, which store plates 130 until they require processing; a manipulator module 112; a user interface 114; a workflow management module 110; and a plate reader 116.

The system is arranged so that plates spend the minimum time out of the incubator(s), and are returned immediately after liquid handling is completed.

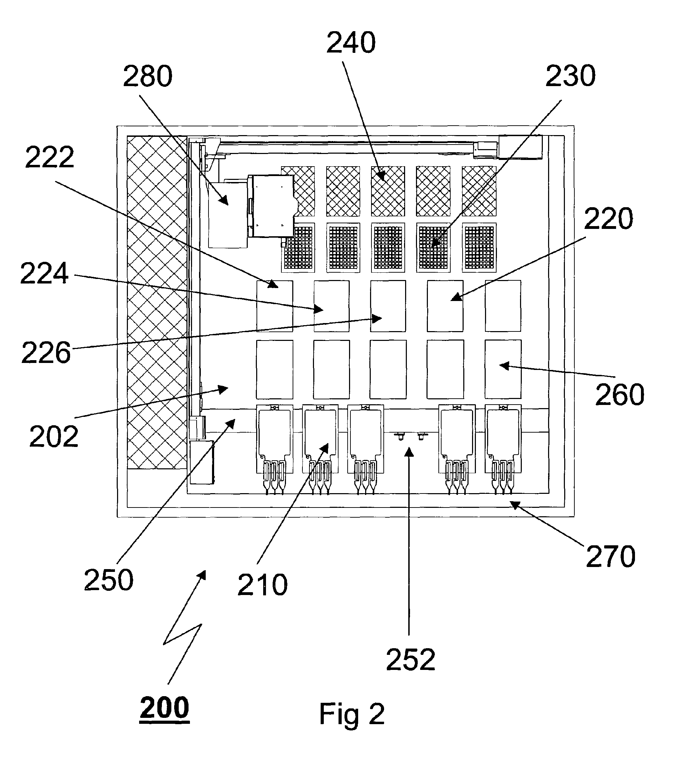

A more detailed view of a liquid handling module is shown in Figure 2. The illustrated module includes: a plurality of reagent reservoirs 210; wash stations 222,224,226; waste disposal stations 220; a heat-exchange manifold 250,252; a pipetting robot 280; and a working bed 202 that supports each of the other components of the module. Also provided in the illustrated liquid handling module are: pipette tip sets 260 for use with the pipetting robot in aspirating and dispensing liquids; plates 230 into which the reagents are ultimately dispensed; and plate lids 240 for covering the plates when not in use.

In liquid handling, in general, liquid is aspirated into and out of reservoirs using pipetting blocks. The pipette tips for the pipette blocks are provided as standard disposable pipette tips in tip blocks 260. Rather than dispose of them after a single use, the tip blocks 260 can ideally be washed after each use so that they can be used to process hundreds of plates before replacement.

Normally, the liquid handling module will have three wash stations (i.e. reservoirs for wash liquid). These are separate to the reagent reservoirs. Each wash station 222,224,226 is a simple trough through which wash liquid is pumped. A level sensor controls the level of wash fluid in each wash station. These wash stations are primarily used to facilitate tip washing. Wash stations may also be used as reservoirs for storage of reservoir cleansing fluids.

To meet the requirement for flexibility, multiple reagent supplies (not shown) are provided. For efficient use of space, the number of reagent reservoirs in a liquid handling bed is limited. Each reagent reservoir in the present embodiment has a volume of approximately 100ml, which is automatically topped up from an appropriate reagent supply during processing.

To know how much reagent is in the reservoirs, the liquid handling system may apply dead reckoning from when the reservoir was filled, and optionally including corrections for evaporation. Alternatively or additionally, it may include a level sensor. The level sensor (for example, a float) feeds back the level of liquid in the reservoir to a controller, which in turn instructs the dispensing of sufficient additional liquid to raise the level. The reservoirs are removable (indeed, Figure 2 shows an empty reservoir port), and can be autoclaved to sterilise them.

The reagent reservoirs 210 plug onto a mounting beam 250 that runs from side to side across the front of the liquid handling module 200. Tubing is embedded in the beam such that the beam becomes a heat-exchange manifold for supplying cooling or heating liquid to the reagent reservoirs. Each reservoir has two connections 252, supply and return. Auto-shut-off connectors are used on the reservoirs and on the ends of the tubing in the beam. When the reservoirs are plugged on to the manifold, the heating/cooling fluid path is opened. When the reservoirs are removed, the connectors shut-off to prevent heating/cooling liquid spillage. There are valves built into the beam so that heating/cooling liquid can selectively directed to the required reagent bath.

Certain liquid handling tasks require the handling of a larger number of different reagents than can be held in the available reservoirs. More than one different reagent supply can be connected to a single reservoir, where necessary.

The reservoirs are generally supplied from reagent containers external to the system, connected via tubing and peristaltic pumps. Bulk reagents are normally located at one end of the system; the tubing being routed through a cut-out in the end panel.

The system provides local storage under the bed of the liquid handling module for reagents that are used in smaller quantities and/or for labile reagents. This minimises the dead volume in the tubing and reduces reagent wastage. The storage area can optionally be chilled to keep the reagents stored here in good condition. The numbers and volumes of containers stored here are limited by the available space.

An automatic change-over mechanism switches between different reagent supplies. It is often advantageous to cleanse the reservoir at change-over.

In accordance with the invention, reservoirs may be used for many different reagents with different storage, supply and safe disposal requirements. In particular, the reagents may be labile or vulnerable to contamination.

Labile reagents may be characterised by a maximum time that the reagent is allowed to be in the reservoir. The presence or absence of a lid on the reservoir may have a corresponding effect on the aging of the reagent. The condition of labile reagents may also be monitored directly, by monitoring the pH of the reagent, for example.

Contamination concerns may be characterised by a maximum time that the reagent should be left unused in a reservoir or by a maximum time by which the reagent should be used once use has begun.

The automated liquid handling system dumps the contents of the reservoir in order to leave the reservoir largely empty ready for washing and/or refilling with either the same or a different reagent. To dump the contents of a reservoir the system may:
- aspirate the contents with pipette tips and dispense the contents to waste
- aspirate the contents using a vacuum device
- incorporate a drain in the reservoir ― this drain operating either via a pump or by gravity
- tip the reservoir over to pour the reagent out of the reservoir.

The system washes reservoirs to reduce the amount of one reagent that is either allowed to dry out in the reservoir or is mixed in with the next reagent to be used. To wash reservoirs, the system may:
- perform a sequence of pipetting operations including aspirating wash fluid from another reservoir, dispensing that fluid into the reservoir being washed and dumping the new contents of the reservoir
- pump a wash fluid into the reservoir using the same mechanism used for alternative reagents within a reservoir followed by dumping the new contents of the reservoir
- pump a wash fluid into the reservoir using another mechanism such as a supply carried on the pipette head followed by dumping the new contents of the reservoir

A wash sequence is an optional stage in filling reservoirs. The system may incorporate a wash sequence to discard liquid that has sat in pipes within the system. A further optional stage is sterilisation, applied after washing.

Advantageously, the use of reagents is scheduled, so that the system knows in advance when a particular reagent will be used. If the schedule should indicate that the reagent will not be used within that specified maximum time then the reagent is to be discarded.

The determination of whether reagent is to be discarded is made in accordance with a number of complementary algorithms:
- if the automated liquid handling system requires to use a reagent and the contents of the reservoir are older than the age allowed for the type of reagent in the reservoir then the system will dump the contents of the reservoir and refill the reservoir
- if at the end of processing, the schedule indicates that the reagent in the reservoir will not be used before the maximum time that it is allowed to be in the reservoir then the system will dump the contents of the reservoir and optionally wash out the reservoir
- if the system requires the use of a reagent from the reservoir and the wrong reagent is in the reservoir then the system will dump the old reagents from the reservoir and optionally wash the reservoir. The system will then fill the reservoir with the next media to be used.
- if the liquid handling module is idle and the contents of the reservoir would have to be discarded before the reservoir was used again, then the system will dump the contents of the reservoir and optionally wash out the reservoir.
- if, at the end of processing, the schedule indicates that the reagent in the reservoir will not be used during the time that the reagent is allowed to remain unused in the reservoir, then the system will dump the contents of the reservoir and optionally wash out the reservoir
- if the schedule is changed so that the contents of the reservoir will not be used then the system will dump the contents of the reservoir and optionally wash out the reservoir

It is noted that the first four of the options above are suitable where no forward model of the use of the reservoir is available. The last two options require a forward model of the use of the reservoirs.

The determination of when reagent is to be disposed in a reservoir is likewise made in accordance with algorithms, with each algorithm representing a different balance of efficiency and complexity. Different choices are appropriate depending on the significance of the process being performed. To this end, the automated liquid handling system may:
- fill the reservoirs being used at the start of the operations where they are used
- fill the reservoirs at a time chosen by examining the schedule so that the reservoir is full with the correct reagent when the system comes to use it.
- fill the reservoirs being used at the end of each operation
- fill the reservoirs being used at the end of each operation so long as this is not the last operation in a batch of operations
- fill a reservoir only when the volume in the reservoir is less than a dead volume appropriate to how the reagent is being used from the reservoir. Consequently, the reservoir volume is allowed to run down from the level that the reservoir is filled to until some threshold level is reached.

In dumping the contents of, or filling, reservoirs, it is often optional whether or not to wash the reservoir out after, or before. Clearly, there are situations where no significant reservoir cleansing is required: for example, when an empty reagent supply container is replaced by a new supply container holding more of the same reagent solution. Here, the reservoir is neither washed nor rinsed during change-over: old reagent in reservoir is emptied by aspirating with pipette tips; the old reagent in the tips is pipetted to waste; and new reagent is pumped to reservoir.

A slightly more thorough cleansing procedure includes: automatic emptying of the reservoir using the tips; pipetting the contents of the tips to waste; flushing through with the next reagent to rinse away remaining material (new reagent is pumped to reservoir, then aspirated from the reservoir into pipette tips, and then pipetted to waste); and finally, new reagent is pumped to reservoir

Where a higher level of cleansing thoroughness is required, the reservoir can be washed with single water step. A small amount of a wash fluid is dispensed to 'swill' the contents of the reservoir. Firstly, old reagent in reservoir is emptied by aspirating with pipette tips. Old reagent, now being carried in the tips, is then pipetted to waste. Next, the reservoir is flushed with wash water (i.e. wash water is pipetted to the reservoir, aspirated back into the tips and then pipetted to waste). Once wash water has been removed, new reagent can be pumped to the reservoir.

A yet more thorough cleansing procedure, which might be applied at change-over, involves three flush stages, the reservoir being flushed with water, then alcohol, and then water again. Once wash water from the third flush step has been removed, new reagent can be pumped to the reservoir.

The use of the three stage water/alcohol/water wash stages reduces the risk of biological contamination and minimises the volume of reagent used. The automated cell culture system can perform automated modelling of alcohol concentration/lifetime to ensure that alcohol concentration in the alcohol wash stage is maintained in range that will effectively kill appropriate cells.

Scripts for execution by the system, in the form of process definitions and/or operational rules, may be incorporated to ensure that these procedures are also automated.

The workflow management module 110 may be arranged to predict how much of each reagent is required for the planned process, and indicate when the user needs to load more consumables - plates and/or reagents. The prediction may also take into account the time during which the reagent is stable. During processing, the quantities of reagent remaining are estimated (using information supplied by the user when reagents are first loaded and optionally including corrections for evaporation).

In one embodiment, a given reservoir is used for multiple reagents. Cross-contamination is countered by programming an automated cleaning procedure of the reservoir between different reagents. The thoroughness of the procedure required may be selected to take account of the different reagents being held in the reservoir over time.

Each reservoir is provided with connection ports for multiple reagents. Figure 2 illustrates this. Here, each reservoir is shown having three ports 270, each port being suitable for connecting a respective reagent supply to the reservoir. A separate pump is provided for pumping reagent from each connected reagent supply so that when that reagent is being used it can be fed in to fill the reservoir.

For convenience, the pipette tips used in other liquid handling tasks are used to facilitate reservoir cleansing. The invention is not, however, limited to the use of pipette tips in reservoir cleansing and alternative approaches, such as plug holes or dedicated suction devices, are also contemplated. In the preferred implementation, much of the convenience of using pipette tips for cleansing reservoirs stems from the fact that emptying the reservoir using pipette tips avoids the need for additional hardware to empty the reservoirs.

A selected automated cleaning procedure is used to clean the reservoir after the use of any given reagent. The need for cleansing can be triggered in a simple manner, whereby the reservoir is only cleaned when it is determined that the current contents of the reservoir will not be used. This simple procedure entails a correspondingly simple 'model' of the reservoir usage.

Alternatively, the need for cleansing can be made dependent upon a much more complex model of scheduled or predicted usage.

Most contemporary cell culturing systems have some degree of programmability. In a preferred system, a sophisticated "intelligent" decision-making facility that incorporates an internal model of the processes scheduled for performance on the system is provided. The preferred system uses its internal model of the forward workload (plan) on the system to determine when a reservoir is not going to be used with its current reagent for a configurable time interval. When this is true (and it is established that the reservoir is not expected to be used for a time), the system runs a script to empty and clean the reservoir.

An example of an appropriate script includes instructions to: pick up a suitable set of pipette tips; aspirate unwanted liquids from the reservoir; dispense unwanted liquids to waste; aspirate wash liquids (e.g. wash water or alcohol) from other reservoirs; dispense wash liquids to the reservoir; aspirate the used wash liquids from the reservoir; and, optionally, wash the pipette tips used.

As was explained above, different change-over cleansing procedures are instigated depending upon the criticality of cleansing. Each procedure is represented by a different script for instructing the liquid handling module to perform the procedure.

A user interface 114 is provided with a facility for displaying a forward view of system utilisation - corresponding to the forward workload. This is displayed module by module, and amongst other things shows details of how busy the different liquid handling modules are predicted to be, giving a forward view of several weeks. From this, the user is able to identify any potential resource conflicts - e.g. too much work in the time available on that module - and is able to reschedule processing manually to minimise the impact of this.

The washing of pipette tips may be required at certain stages in the processing of plates. While the potential for cross-contamination due to the use of pipette tips in cleaning the reservoirs must be considered, it is often acceptable to reuse the same pipette tips when processing different cell lines, provided that the reused tips are washed between each use. For example, a 70% alcohol wash might be used to minimise the chance of cross contamination between cell lines in a cell culture experiment.

After each use, the tips may be washed through a sequence of water, alcohol, water. The steps of washing and sterilisation of pipette tips using non-recirculating reservoirs are now described in more detail.

As would be readily apparent to the skilled man, the automated system washes pipette tips to control carry-over of reagents from one step in a process to another step and to control carry-over of viable cells from one step in a process to another step.

A typical tip wash sequence would be "dirty first wash" (to remove the gross contamination from the tip), "alcohol wash" (to kill any remaining cells on the tip) and "second clean water wash" (to remove the alcohol and any remaining cell debris that may have precipitated during the alcohol wash).

The specific requirements of each process carried out in the liquid handling unit mean that it can be important to ascertain certain conditions of the reagent in the reservoir. In cell culture, environmental requirements (such as temperature, oxygen concentration, or pH) need to be maintained within certain acceptable bounds. To monitor whether this is the case, a condition indicator may be added to the reagent in order to indicate a condition of the reagent (e.g. methyl orange for indicating pH level). To this end, the reservoir may be provided with an indicator sensor for sensing the indicated reagent condition. The output from the indicator sensor can then be fed back to the automated system so that the condition of the reagent in the reservoir can be maintained within the defined bounds. Alternatively, the reservoir may be provided with a sensor for directly sensing the condition (e.g. a pH sensor) and feeding the sensed condition back to the automated system.

## Claims

1. A method for controlling usage of reservoirs in a liquid handling area (200) of an automated liquid handling system, the liquid handling area comprising at least one reservoir (210), which, in use, contains a reagent,
the method comprising:
determining whether the reagent contained in the reservoir (210) is expected to be used within a predetermined time interval or has not been used for a given period; and
where the reagent is not expected to be used within the predetermined time interval or is no longer suitable for use, removing the contents of the reservoir.

2. A method as claimed in claim 1, wherein the predetermined time interval is different from the given period.

3. A method as claimed in any one of claims 1 or 2, wherein removing the contents of the reservoir comprises aspirating the contents and dispensing the aspirated contents to waste.

4. A method as claimed in any one of claims 1 or 2, wherein the reservoir includes a drain, and wherein removing the contents of the reservoir comprises opening the drain to facilitate the escape of the contents from the reservoir.

5. A method as claimed in any one of claims 1 or 2, wherein removing the contents of the reservoir comprises tipping the reservoir thereby pouring the contents away to waste.

6. A method as claimed in any one of the preceding claims, further comprising cleansing the reservoir in accordance with a cleansing procedure.

7. A method as claimed in any one of the preceding claims, further comprising the step of removing cleansing liquids from a further reservoir (222,224,226).

8. A method as claimed any one of the preceding claims, further comprising dispensing liquids to the reservoir.

9. A method as claimed in any one of the preceding claims, further comprising:
providing a plurality of pipette tips (260) for transferring wash fluids to and from the reservoir; and
washing the pipette tips used.

10. A method as claimed in any of the preceding claims, further comprising determining when to fill the reservoir.

11. A method as claimed in claim 10, wherein the reservoir is provided with a level sensor, the method further comprising sensing the level of reagent in the reservoir and ensuring that, when the current reagent is expected to be used, the level of reagent in the reservoir is maintained constant.

12. A method as claimed in claim 10, wherein the reservoir is provided with a level sensor, the method further comprising checking whether the level of reagent has dropped below a first minimum threshold and ensuring that, when the current reagent is expected to be used, reagent is dispensed into the reservoir in order to increase the volume of reagent in the reservoir above the first threshold.

13. A method as claimed in claim 10 or claim 12, wherein the reservoir is provided with a level sensor, the method further comprising checking whether the level of reagent exceeds a second maximum threshold and ensuring that, when the current reagent is expected to be used, reagent is aspirated from the reservoir in order to reduce the volume of reagent in the reservoir below the second threshold.

14. An automated liquid handling unit (200) for facilitating cleansing of reagent reservoirs, the unit comprising:
at least one reagent reservoir (210), which, in use, contains a reagent; and
a liquid handling robot (280) for effecting a reservoir management procedure;
wherein the reservoir management procedure includes a procedure for removing the contents of the reservoir, the procedure being governed in accordance with a determination of whether the reagent contained in the reservoir (210) is expected to be used within a predetermined time interval or has not been used for a given period.

15. A unit as claimed in claim 14, wherein the predetermined time interval is different from the given period.

16. A unit as claimed in either of claims 14 or 15, wherein the liquid handling robot is provided with pipette tips and wherein the procedure for removing the contents of the reservoir comprises aspirating the contents with the pipette tips and dispensing the aspirated contents to waste.

17. A unit as claimed in either of claims 14 or 15, wherein the reservoir includes a drain, and wherein the procedure for removing the contents of the reservoir comprises opening the drain to facilitate the escape of the contents from the reservoir.

18. A unit as claimed in either of claims 14 or 15, wherein the procedure for removing the contents of the reservoir comprises tipping the reservoir thereby pouring the contents away to waste.

19. A unit as claimed in any one of claims 14 to 18, wherein the reservoir cleansing procedure also includes a procedure for cleansing the reservoir.

20. A unit as claimed in any one of claims 14 to 19, wherein the reservoir has a heat exchange portion (250) for facilitating cooling or heating of the reagent within the reservoir.

21. A unit as claimed in any one of claims 14 to 19, wherein the liquid handling area includes a temperature controlled water bath.

22. A unit as claimed in claim 20, wherein the heat exchange portion conducts heat between the water bath and the reagent in the reservoir.

23. A unit as claimed in any of claims 14 to 22, wherein the reservoir is provided with a lid (240) to reduce evaporation.

24. A unit as claimed in any of claims 14 to 23, wherein the reagent includes a condition indicator for indicating a condition of the reagent, and wherein the reservoir is provided with a condition sensor for sensing the indicated reagent condition and feeding the indicated condition back to the automated system.

25. A unit as claimed in any of claims 14 to 23, wherein the reservoir is provided with a sensor for directly sensing the reagent condition and feeding the sensed condition back to the automated system.
